(19) Europäisches Patentamt
European Patent Office
Office européen des brevets

(11) EP 2 072 585 A1

(12) **EUROPÄISCHE PATENTANMELDUNG**

(43) Veröffentlichungstag:
**24.06.2009 Patentblatt 2009/26**

(51) Int Cl.:
***C09D 5/03*** *(2006.01)*

(21) Anmeldenummer: **07025019.6**

(22) Anmeldetag: **21.12.2007**

(84) Benannte Vertragsstaaten:
**AT BE BG CH CY CZ DE DK EE ES FI FR GB GR HU IE IS IT LI LT LU LV MC MT NL PL PT RO SE SI SK TR**
Benannte Erstreckungsstaaten:
**AL BA HR MK RS**

(71) Anmelder: **EMS-PATENT AG**
**7013 Domat/Ems (CH)**

(72) Erfinder:
- **Kraus, Michael, Dr.rer.nat.**
  **82515 Wolfratshausen (DE)**
- **Robertz, FH Werner, Dipl.Ing**
  **CH-7013 Domat (CH)**

(74) Vertreter: **Pfenning, Meinig & Partner GbR**
**Patent- und Rechtsanwälte**
**Theresienhöhe 13**
**80339 München (DE)**

(54) **Mattierungsmittel für Pulverlacke, wärmehärtbare Beschichtungsmasse sowie deren Verwendungszwecke**

(57) Die vorliegende Erfindung betrifft ein Mattierungsmittel für Pulverlacke, enthaltend mindestens ein mindestens einfaches Umsetzungsprodukt, herstellbar durch Reaktion
a) mindestens einer aromatischen Polycarbonsäure, die mindestens drei Säurefunktionalitäten aufweist, oder deren Derivate, wobei die Derivate ausgewählt sind aus der Gruppe bestehend aus Carbonsäureanhydriden, Carbonsäurehalogeniden, Carbonsäureestern, Aktivestern (besonders reaktive Ester, z.B. erhalten durch Aktivierung einer Carbonsäure durch Veresterung) und/oder Mischungen hieraus mit
b) mindestens einem Nucleophil, das mindestens eine nucleophile Sauerstoff-, Stickstoff-, Schwefel- oder Phosphorfunktionalität und/oder
mindestens zwei nucleophile Sauerstoff-, Stickstoff-, Schwefel- oder Phosphorfunktionalitäten, die gleich oder verschieden sein können, aufweist.

EP 2 072 585 A1

**Beschreibung**

Die vorliegende Erfindung betrifft die Herstellung und die Verwendung eines Mattierungsmittels für Pulverlacke.

Unter Pulverlack, auch Beschichtungsmasse oder Überzugsmittel genannt, wird eine verarbeitungsfertige Zubereitung (Produkt) verstanden, die Bindemittel, Härter, Füllstoff und optional Additive enthält.

Zur Mattierung von Pulverlacken sind verschiedene Methoden entwickelt worden. So werden zum Beispiel Wachse, alleine oder in Kombination mit geeigneten Füllstoffen, verwendet. Die Verwendung von Wachsen limitiert die Mattierungswirkung auf Glanzgrade > 40 (60° Geometrie) und führt durch Ausschwitzen des Wachses zu speckigen Oberflächen in Abhängigkeit von der Unverträglichkeit des Wachses mit der Harzkomponente des Pulverlacks. Die geringe Wirksamkeit solcher konventioneller Mattierungsmittel führte zur Entwicklung neuer Mattierungsmechanismen für Pulverlacke. Zum Beispiel können matte Pulverlackoberflächen erzeugt werden, indem (1) Pulverlacke unterschiedlicher Reaktivität oder Schmelzviskosität gemischt werden, (2) Pulverlackkomponenten unterschiedlicher Reaktivität oder Chemie miteinander extrudiert werden, (3) spezielle Härter begrenzter Mischbarkeit mit der Harzkomponente zugefügt werden, (4) stark verzweigte Bindemittel mit reaktiven Endgruppen verwendet werden, oder (5) Vernetzungsmittel die mit verschiedenen funktionellen Gruppen der Harzkomponente (z.B. eine Mischung aus Hydroxyl- und Carboxylpolyester) reagieren können, bzw. selber verschiedene funktionelle Gruppen besitzen. Die Beispiele (1) bis (3) werden für Epoxid-, Polyester-Epoxid-, oder Polyurethanpulverlacksysteme verwendet, während die Beispiele (4) und (5) ausschließlich für Polyurethansysteme verwendet werden. Die Mattierung von Carboxylpolyester/Hydroxyalkylamid-Pulverlacken mit niedrigen Glanzgraden wird mit Hilfe von Beispiel (1), dem Dry-Blend-Verfahren, erreicht. Das Dry-Blend-Verfahren, z.B. im US-Patent 3,842,035, erfordert eine zusätzliche Herstellstufe und die vermischten Komponenten können sich während der Verwendung und der Aufarbeitung voneinander trennen. Dies führt zu Fluktuationen beim erhaltenen Glanzwert und den optimalen Verarbeitungsbedingungen.

Mattierungsmittel für Pulverlacke mit Epoxidharzen bzw. Hybridharzen (reaktive Polyester/Epoxidharz-Mischungen, welche keinen weiteren Härter mehr benötigen) als Bindemittel bestehen aus einer Polycarbonsäure sowie einem Beschleuniger. Diese Mattierungsmittel ermöglichen die Mattierung solcher Systeme in Glanzgraden zwischen 10 und 50 (60° Geometrie). Es gibt eine Vielzahl solcher Matthärter, sie funktionieren aber nur in diesen Systemen. Zum Beispiel Vestagon B68 (Monosalz einer Polycarbonsäure und eines cyclischen Amidins) und Vestagon B55 (Disalz einer Polycarbonsäure und eines cyclischen Amidins) für Hybrids und Casamid A790 (Mischung aus Pyromellithsäure und N,N-Dimethyl-N'-phenylharnstoff) und Casamid 2228 (substituierte Aminocarbonsäure) für Triglycidylisocynurat (TGIC). Alle enthalten eine Carbonsäure, die durch hohe Funktionalitäten für eine raschere Reaktion mit dem Härter sorgt, als dies mit dem Polyesterharz der Fall ist. Verwendete Carbonsäuren sind z.B. Pyromellithsäure oder Trinitriloessigsäure. Die Reaktionsgeschwindigkeit wird bei epoxyfunktionellen Härtern noch durch Zugabe geeigneter Beschleuniger erhöht. In hellen Farben muss aufgrund der Vergilbung beim Einbrennen auf Mattierungsmittel mit geringerer Mattierungswirkung zurückgegriffen werden. Die erhaltenen Pulverlackbeschichtungen weisen aufgrund der engmaschigen Vernetzung in der Regel einen verminderten Impact auf.

Die WO 03/102048 A1 beschreibt die Darstellung und Verwendung von Trimellitsäure-endfunktionalisierten Esteramiden als Mattierungsmittel. Die Reaktion erfolgt in einem hochsiedenden, polar-aprotischen Lösungsmittel zwischen dem Anhydridring von Trimellitsäureanhydrid und den Hydroxylgruppen beispielsweise eines Hydroxyalkylamids. Als Hydroxyalkylamid wird Primid XL-552 erwähnt. Als Beispiel ist auch ein Polyester/Primid Pulverlack aufgeführt. Die hier erwähnten Mattierungsmittel weisen jedoch den Nachteil auf, dass sie sehr schwer herstellbar sind.

Die EP 1 302 517 A2 beschreibt die Verwendung von Styrol-Maleinsäureanhydrid-Copolymeren zur Mattierung von Hydroxyalkylamid-Pulverlacken.

Ausgehend hiervon ist es Aufgabe der vorliegenden Erfindung, ein Mattierungsmittel zu entwickeln, das die Mattierung von carboxylpolyesterenthaltenden Pulverlacken ermöglicht. Das Mattierungsmittel soll bei der Aushärtung kovalent in die Pulverlackmatrix eingebaut werden können und stellt somit gleichzeitig einen Härter dar. Bei der Herstellung des Pulverlacks soll das Mattierungsmittel wie ein Additiv den einzelnen Pulverlackkomponenten beigefügt und mit diesen zu einem Pulverlack verarbeitet werden können. Um gute mechanische Eigenschaften des ausgehärteten Lacksystems und somit ausgezeichnete Stabilität des Systems zu gewährleisten, sollen Reverse-Impact-Werte von mindestens 10 inch*pd, bevorzugt mindestens 30 inch*pd, besonders bevorzugt mindestens 50 inch*pd erreichbar sein. Weiterhin soll ein derart aushärtbares Pulverlacksystem bereitgestellt werden.

Diese Aufgabe wird bezüglich des Mattierungsmittels der Pulverlacke mit den Merkmalen des Anspruchs 1 und bezüglich der wärmehärtbaren Beschichtungsmasse mit den Merkmalen des Anspruchs 16 gelöst. Dabei stellen die abhängigen Ansprüche jeweils vorteilhafte Weiterbildungen dar. Mit den Ansprüchen 25 bis 27 werden Verwendungsmöglichkeiten der Beschichtungsmasse genannt.

Erfindungsgemäß wird somit ein Mattierungsmittel für Pulverlacke bereitgestellt, enthaltend mindestens ein mindestens einfaches Umsetzungsprodukt, herstellbar durch Reaktion

a) mindestens einer aromatischen Polycarbonsäure, die mindestens drei Säurefunktionalitäten aufweist, oder deren

Derivate, wobei die Derivate ausgewählt sind aus der Gruppe bestehend aus Carbonsäureanhydriden, Carbonsäurehalogeniden, Carbonsäureestern, Aktivestern (besonders reaktive Ester, z.B. erhalten durch Aktivierung einer Carbonsäure durch Veresterung) und/oder Mischungen hieraus mit

b) mindestens einem Nucleophil, das mindestens eine nucleophile Sauerstoff-, Stickstoff-, Schwefel- oder Phosphorfunktionalität und/oder
mindestens zwei nucleophile Sauerstoff-, Stickstoff-, Schwefel- oder Phosphorfunktionalitäten, die gleich oder verschieden sein können, aufweist.

Diese Mattierungsmittel bieten den Vorteil, dass sie gegenüber Verbindungen, wie sie im Stand der Technik genannt sind, bedeutend einfacher und damit kostengünstiger herzustellen sind. Weiterhin ist vorteilhaft, dass die Herstellung zweier unabhängig voneinander hergestellter Pulverlacke mit deutlich unterschiedlicher Säurezahl entfällt. Mit Hilfe des erfindungsgemäßen Mattierungsmittels können weitgehend temperaturunabhängige Glanzwerte von < 70 Glanzeinheiten, bevorzugt < 40 Glanzeinheiten, besonders bevorzugt < 30 Glanzeinheiten (Geometrie 60°) erzielt werden. Durch die Unabhängigkeit des Glanzwertes von der Temperatur, bei der die Beschichtungsmasse ausgehärtet wurde, kann eine zuverlässige Aushärtung bereits bei milden Bedingungen durchgeführt werden, wobei z.B. thermische Abbaureaktionen und dadurch bedingte unerwünschte Verfärbungen vollständig vermieden werden können. Ebenso konnte überraschenderweise festgestellt werden, dass ein derartiges Mattierungsmittel bei Aushärtung von Pulverlacken gute mechanische Eigenschaften der ausgehärteten Pulverlacke (beispielsweise gute Reverse-Impact-Werte) liefert. Zusammenfassend kann somit festgestellt werden, dass das erfindungsgemäße Mattierungsmittel sowohl bezüglich der Einfachheit seiner Herstellung, als auch bezüglich der erreichten optischen und mechanischen Eigenschaften der damit ausgehärteten Pulverlacke vorteilhaft ist.

In einer vorteilhaften Ausgestaltungsform ist die mindestens eine aromatische Polycarbonsäure oder deren Derivate ausgewählt aus der Gruppe bestehend aus Hemimellitsäure, Hemimellitsäureanhydrid, Trimellitsäure, Trimellitsäureanhydrid, Trimesinsäure, Pyromellitsäure und/oder Pyromellitsäureanhydrid.

Weiterhin ist es vorteilhaft, wenn die nucleophilen Funktionalitäten des mindestens einen Nucleophils ausgewählt sind aus der Gruppe bestehend aus OH, SH, $NH_2$, NH(R) mit R = $C_1$ bis $C_{10}$ linear oder verzweigtes Alkyl, $PH_2$, $PH_2(O)$, HP(O)(OH) oder $HP(O)_2$.

Weiter bevorzugt ist es, wenn das Nucleophil ausgewählt ist aus der Gruppe bestehend aus Monoalkoholen; Diolen; alkoxylierten Diolen; Polyolen; alkoxylierten Polyolen; Oligomeren, Polymeren und/oder Copolymeren aus Ethylenoxid, Propylenoxid, Tetrahydrofuran, $\alpha,\omega$-Hydroxysäuren, $\alpha,\omega$-Aminosäuren, Lactonen und/oder Lactamen, Aminen, Mercaptanen, Phosphanen, Phosphinsäuren, Phosphiten und/oder Mischungen hieraus.

Die Reaktion zwischen den beiden Komponenten kann dadurch beschleunigt werden, dass ein Katalysator, bevorzugt ausgewählt aus der Gruppe bestehend aus quartären Ammonium- und/oder Phosphoniumsalzen; Metallsalzen und/oder Metallverbindungen, z.B. Zinn-(II)-octoat; Imidazolen, z.B. 2-Phenyl-2-imidazol; tertiäre Aminen, z.B. Pyridin, Triethylamin, N-Benzyldimethylamin, 1,8-Diazabicyclo[5,4,0]-7-undecen und/oder Mischungen hieraus verwendet wird. Der Katalysator wird bevorzugt in Mengen von 0,001 bis 2,5 mol-%, weiter bevorzugt 0,01 bis 2,0 mol-%, besonders bevorzugt 0,01 bis 1,0 mol-%, ganz besonders bevorzugt 0,015 bis 0,5 mol.% bezogen auf die Summe der Edukte des Mattierungsmittels zugegeben. Bevorzugt wird die Reaktion in einem Lösungsmittel ausgewählt aus der Gruppe bestehend aus Aceton, 2-Butanon, 4-Methyl-2-pentanon, 1,4-Dioxan, Dimethylsulfoxid, N,N-Dimethylformamid, N,N-Dimethylacetamid, Acetonitril, Diethylcarbonat, Butylacetat und/oder Mischungen hieraus ausgeführt.

Insbesondere ist es vorteilhaft, wenn bei der Reaktion das molare Mischungsverhältnis der Summe der mindestens einen aromatischen Polycarbonsäure oder deren Derivate zur Summe des mindestens einen Nucleophils zwischen 1,2:1 und 4,8:1, bevorzugt 2,2:1 und 3,8:1, besonders bevorzugt 2,5:1 und 3,5:1 liegt.

Das bei der Reaktion gebildete Umsetzungsprodukt weist bevorzugt eine Struktur gemäß Formel I auf,

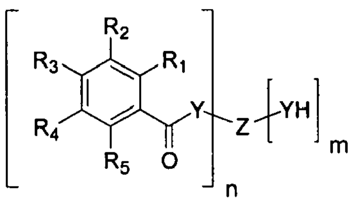

Formel I

wobei Y gleich oder verschieden ist und ausgewählt ist aus O, S, NH, N(R), PH, PH(O), P(O)(OH) oder $P(O)_2$, Z 2 bis 26 Kohlenstoffatome, bevorzugt 2 bis 20 Kohlenstoffatome, besonders bevorzugt 3 bis 8 Kohlenstoffatome, ganz besonders bevorzugt 4 bis 6 Kohlenstoffatome besitzt und ausgewählt ist aus linearen, cyclischen oder verzweigten Alkandiyl-, Alkendiyl-, Arenediyl- oder heteroatomhaltige Arenediylgruppen, $R_1$ bis $R_5$ unabhängig voneinander ausgewählt sind aus der Gruppe bestehend aus H, Carboxylgruppe und/oder Carbonsäureanhydridfunktionalitäten zwischen zwei benachbarten Resten $R_1$ bis $R_5$, und m von 0 bis 7 und n von 1 bis 8 beträgt, mit der Maßgabe dass m+n maximal 8 beträgt.

Besonders bevorzugt ist es, wenn das mindestens eine Umsetzungsprodukt eine Verbindung ausgewählt aus der Gruppe bestehend aus a) bis f) ist:

a)

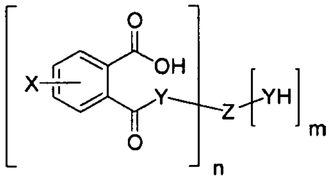

Formel II

wobei X eine zur freien Carboxylgruppe meta- oder paraständige weitere freie Carboxylgruppe bedeutet,

b)

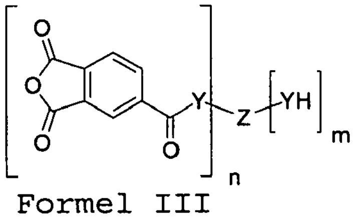

Formel III

c)

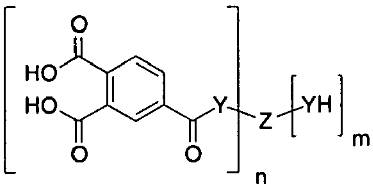

Formel IV

d)

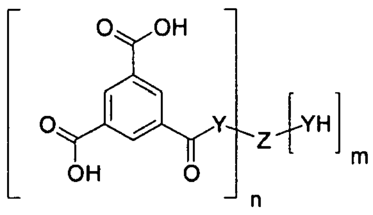

Formel V

e)

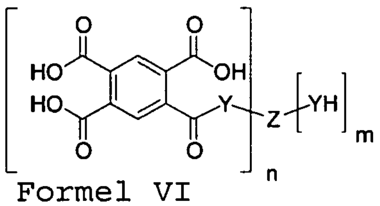

Formel VI

f)

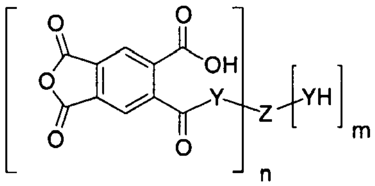

Formel VII

wobei jeweils Y, Z, n, m, m+n die gleiche Bedeutung wie oben definiert haben.

Das Mattierungsmittel kann dabei das Umsetzungsprodukt und den nicht umgesetzten Anteil der aromatischen Polycarbonsäure mit mindestens drei Säurefunktionalitäten enthalten.

Dem Mattierungsmittel können eine oder mehrere Di- oder Polycarbonsäuren und/ oder jeweils deren Anhydride zugemischt werden. Bevorzugt sind diese Komponenten dabei ausgewählt aus der Gruppe bestehend aus Hemimellitsäure, Hemimellitsäureanhydrid, Trimellitsäure, Trimellitsäureanhydrid, Trimesinsäure, Pyromellitsäure, Pyromellitsäureanhydrid, Phthalsäure, Phthalsäureanhydrid, Isophthalsäure und/oder Terephthalsäure. Der Mengenanteil der nicht umgesetzten Polycarbonsäure mit mindestens drei Säurefunktionalitäten und der optional zugemischten einen oder mehreren Di- oder Polycarbonsäuren beträgt hierbei 0,5 bis 70 Gew.-%, bevorzugt 1 bis 65 Gew.-%, besonders bevorzugt 3 bis 55 Gew.-%, ganz besonders bevorzugt 10 bis 30 Gew.-%, bezogen auf das Mattierungsmittel.

Als weitere Komponenten können dem Mattierungmittel ein oder mehrere β-Hydroxyalkylamide der allgemeinen Formel VIII und/oder der weiter unten abgebildeten allgemeinen Formel IX zugegeben werden.

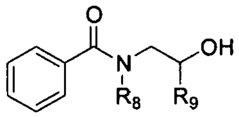

Formel VIII

Hierbei bedeuten $R_9$ Wasserstoff oder lineares oder verzweigtes $C_1$ bis $C_5$-Alkyl und $R_8$ Wasserstoff, lineares oder verzweigtes $C_1$ bis $C_5$-Alkyl oder (HO-CH($R_9$)-$CH_2$)-, wobei $R_9$ die zuvor angegebene Bedeutung hat.

Bevorzugt ist es hierbei, wenn das molare Verhältnis der OH-Gruppen des β-Hydroxyalkylamids zu den COOH-Gruppen des Mattierungsmittels im Bereich von 0,1:1 bis 2,5:1, bevorzugt 0,3:1 bis 2,0:1, besonders bevorzugt 0,6:1 bis 1,6:1 liegt.

Erfindungsgemäß wird ebenso eine wärmehärtbare Beschichtungsmasse bereitgestellt, enthaltend

a) mindestens ein Bindemittel

b) mindestens ein oben angegebenes Mattierungsmittel,

c) mindestens einen Härter.

Vorteilhaft ist hierbei, wenn das Bindemittel mindestens einen Stoff, ausgewählt aus der Gruppe bestehend aus carboxylfunktionellen Polyestern, carboxylfunktionellen Copolyestern, Epoxidharzen und/oder Mischungen hieraus, enthält. Bevorzugt ist das Bindemittel hierbei eine Mischung aus mindestens zwei Polyestern und/oder Copolyestern mit verschiedenen Säurezahlen.

Weiter bevorzugt ist, dass der Härter ausgewählt ist aus der Gruppe bestehend aus β-Hydroxyalkylamiden, Triglycidylisocyanuraten, Glycidylestern und/oder Mischungen hieraus. Insbesondere besitzt das β-Hydroxyalkylamid eine Struktur gemäß Formel IX,

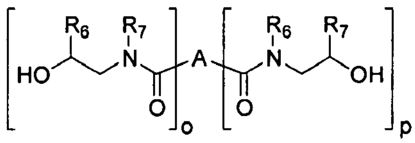

Formel IX

wobei $R_6$ Wasserstoff oder lineares oder verzweigtes $C_1$-$C_5$-Alkyl ist, $R_7$ Wasserstoff, lineares oder verzweigtes $C_1$-$C_5$-Alkyl oder (HO-CH($R_6$)-$CH_2$)-, wobei $R_6$ die zuvor angegebene Bedeutung besitzt, $R_6$ und $R_7$ gleich oder verscheiden sein können, A eine chemische Bindung oder eine ein- oder mehrbindige organische Gruppe, abgeleitet aus linearen, verzweigten, cyclischen, gesättigten, ungesättigten, aromatischen und/oder substituierten Kohlenwasserstoffgruppen mit 1 bis 26 Kohlenstoffatomen, bevorzugt 2 bis 20 Kohlenstoffatomen, besonders bevorzugt 4 bis 8 Kohlenstoffatomen ist, o 1 bis 2, p 0 bis 2 beträgt, wobei o+p mindestens 2 ist.

Besonders bevorzugte Beispiele hierfür sind Bis[N,N'-di(β-hydroxyethyl)-adipamid] und/oder Bis[N,N'-di(β-hydroxypropyl)-adipamid].

Das bevorzugte molare Mischungsverhältniss von Härter zu Bindemittel liegt im Bereich zwischen 0,5:1 bis 1,5:1, bevorzugt 0,7:1 bis 1,3:1, besonders bevorzugt 0,8:1 bis 1,2:1.

Ebenso ist es möglich, dass weitere Additive, ausgewählt aus der Gruppe bestehend aus aromatischen Polycarbonsäuren mit mindestens 2 Carbonsäurefunktionalitäten, Pigmenten, Füllstoffe, Stabilisatoren, Triboadditive, Verlaufmittel, Entgasungsmittel, Antioxidantien, Vergilbungsstabilisatoren und/oder Katalysatoren enthalten sind.

Die erfindungsgemäße Beschichtungsmasse lässt sich insbesondere durch die nachfolgende Gesamtformulierung beschreiben:

| | | |
|---|---|---|
| a) Bindemittel | 35 bis 96 | Gew.-%, |
| bevorzugt | 50 bis 80 | Gew.-%, |
| b) erfindungsgemäßes Mattierungsmittel | | |

(fortgesetzt)

| | | |
|---|---|---|
| | 0,5 bis 5 | Gew.-%, |
| bevorzugt | 1 bis 3 | Gew.-%, |
| c) Härter | 4 bis 10 | Gew.-%, |
| bevorzugt | 5 bis 7 | Gew.-%, |
| d) Additive | 0,1 bis 50 | Gew.-%, |
| bevorzugt | 10 bis 40 | Gew.-%. |

Verwendungsmöglichkeiten der erfindungsgemäßen Beschichtungsmasse sind beispielsweise für das Flammspritzen und/oder das ladungsfreie Aufstreuen auf die zu beschichtenden Werkstoffe, als Schutzschichten, für das elektrostatische Pulverbeschichten, bevorzugt nach dem triboelektrischen oder Corona-Pulversprühverfahren oder das Wirbelschichtverfahren.

Die vorliegende Erfindung wird anhand der nachfolgenden Ausführungen, Beispiele und der Figur näher erläutert, ohne die Erfindung auf die hier angegebenen beispielhaften Ausführungen beschränken zu wollen.

Die vorliegende Erfindung betrifft ein Mattierungsmittel für pulverförmige, thermisch härtende Überzugsmittel. Zur Einstellung des gewünschten Glanzgrades wird dem Pulverlack das erfindungsgemäße Mattierungsmittel in Mengen, die zur Erreichung des angestrebten Glanzgrades nötig sind, beigefügt. Dieses Mattierungsmittel wird kovalent in die Matrix des Beschichtungsmittels eingebaut. Dies kann zum Beispiel über die restlichen COOH-Gruppen des Umsetzungsproduktes oder über die verbleibenden OH-Gruppen eines etwaige zugesetzten β-Hydroxyalkylamids erfolgen. Die vorliegende Erfindung betrifft auch die Verwendung des erfindungsgemäßen Beschichtungssystems für das elektrostatische Pulverbeschichten und das Wirbelsinterverfahren, sowie ein Verfahren zur Darstellung des erfindungsgemäßen Mattierungsmittels.

Die Darstellung des erfindungsgemäßen Mattierungsmittels erfolgt durch Reaktion eines oder mehrerer geeigneter linearer und/oder verzweigter, aromatischer und/oder heteroaromatischer und/oder aliphatischer Nucleophile mit einer Carbonsäurekomponente mit mindestens drei Säurefunktionalitäten. Geeignete Carbonsäurekomponenten sind aromatische Carbonsäuren und/oder deren Anhydride. Beispielsweise Trimesinsäure, Trimellitsäure, Pyromellitsäure, Trimellitsäureanhydrid oder Pyromellitsäureanhydrid. Bevorzugt als Carbonsäurekomponente ist Trimellitsäureanhydrid.

Als Beispiele geeigneter Nucleophile mit Sauerstoff als nucleophilem Zentrum seien Alkohole wie Methanol, Ethanol, n-Propanol, i-Propanol, 1-Butanol, 2-Butanol, sowie Fettalkohole mit 10 bis 14 Kohlenstoffatomen, aliphatische Diole wie Ethylenglykol, 1,3-Propandiol, 1,2-Butandiol, 1,3-Butandiol, 1,4-Butandiol, 2,2-Dimethylpropandiol-1,3 (Neopentylglykol), 2,5-Hexandiol, 1,6-Hexandiol, 4,4'-Isopropylidenedicyclohexanol, 4,4'-Bicyclohexyldiol, 1,4-Dimethylolcyclohexan, Diethylenglykol, Dipropylenglykol, 2-Methyl-1,3-propandiol, 2-Butyl-2-ethyl-1,3-propandiol und 2,2-Bis-[4-(2-hydroxy)]-phenyl-propan, sowie Polyole, wie z.B. Neopentylglycol, Glycerol, Hexantriol, Pentaeryltritol, Sorbitol, Trimethylolethan, Trimethylolpropan, und Tris(2-hydroxy)-isocyanurat, oder auch Oligomere, Polymere, und Copolymere aus Ethylenoxid, Propylenoxid, Tetrahydrofuran, Lactone und Lactame, genannt. Ebenfalls geeignet sind alkoxylierte Diole und Polyole. Entsprechend den Alkoholen können auch Nucleophile eingesetzt werden, deren nucleophiles Zentrum Stickstoff (z.B. Amine oder Diamine, wie z.B. 3-Aminomethyl-3,5,5-trimethylcyclohexylamin), Schwefel (z.B. Thiole) oder Phosphor ist. Bevorzugt sind jedoch Verbindungen mit mindestens zwei nucleophilen Funktionalitäten, die durch eine oder mehrere Amidfunktionalitäten voneinander getrennt sind, von den erfindungsgemäßen Nucleophilen ausgenommen. Als Beispiel hierfür seien die Reaktionsprodukte von Dicarbonsäuren mit 2 äquivalenten Dialkanolaminen, insbesondere das Reaktionsprodukt von 1 Mol Adipinsäuredimethylester mit 2 Mol Diethanolamin, genannt.

Die Mattierungsmittel werden vorzugsweise in einem organischen polar-aprotischen Lösungsmittel, wie 2-Butanon oder 4-Methyl-2-pentanon dargestellt und können nach der erfolgten Umsetzung durch Filtration vom Lösungsmittel abgetrennt werden.

Gegenstand der vorliegenden Erfindung ist ebenfalls die Herstellung und Verwendung der erfindungsgemäßen pulverförmigen Überzugsmittel. Die Beschichtungsmasse besteht beispielsweise aus:

(A) Einem carboxylfunktionellem Polyester, enthaltend aliphatische, cycloaliphatische, aromatische Polycarbonsäuren und/oder Polycarbonsäure-Anhydride, wobei der Polyester einen Tg im Bereich von 30 °C bis 80 °C und eine Säurezahl von etwa 20 bis $100\,\frac{mg\,KOH}{g}$ aufweist,

(B) dem erfindungsgemäßen Mattierungsmittel, gekennzeichnet durch Strukturformel (I),

(C) einem β-Hydroxyalkylamid, wobei das Äquivalentverhältnis von β-Hydroxyalkylamid-Äquivalenten zu Carbonsäure-Äquivalenten im Bereich von 0,1:1 bis 2,5:1, bevorzugt 0,3:1 bis 2,0:1, besonders bevorzugt 0,6:1 bis 1,6:1 liegt, und

(D) weiteren üblichen Pigmenten und/oder Füllstoffen und/oder Additiven. Dabei handelt es sich z.B. um Additive aus der Gruppe Beschleuniger, Verlaufs- und Entgasungsmittel, Hitze-, UV- und/oder HALS-Stabilisatoren und/oder Triboadditive.

Die Herstellung der Pulverlacke erfolgt vorzugsweise in der Schmelze durch gemeinsame Extrusion sämtlicher Formulierungsbestandteile bei Temperaturen zwischen 110 °C und 170°C. Das Extrudat wird anschließend abgekühlt, gemahlen und auf eine Korngröße < 90 μm abgesiebt. Grundsätzlich sind auch andere Verfahren zur Herstellung der Pulverlacke geeignet, wie z.B. Vermischen der Formulierungsbestandteile in Lösung und anschließender Ausfällung oder destillative Entfernung des Lösungsmittels. Geeignete Applikationsmethoden für die erfindungsgemäßen Pulverlacke sind z.B. das Flammspritzen, ladungsfreies Aufstreuen auf die zu beschichtenden Werkstoffe, Wirbelsintern und vorzugsweise elektrostatisches Pulverspritzen. Die applizierten erfindungsgemäßen Pulverlacke werden im Allgemeinen bei 100 °C bis 250°C, bevorzugt bei 150 °C bis 250°C, besonders bevorzugt bei 180 °C bis 230°C, während 5 bis 30 Minuten ausgehärtet.

**Beispiele und Vergleichsbeispiele für Mattierungsmittel**

**Herstellbeispiel 1:**

In einem 2000 mL Mehrhalskolben, ausgerüstet mit Rückflusskühler, Trockenrohr, mechanischem Rührwerk und Tropftrichter, werden 322.4 g (1.68 mol, 3 Äquiv.) Trimellitsäureanhydrid und 0.3 g (0.02 mol, 0.003 Äquiv.) Pyridin eingewogen und in 560 mL trockenem 4-Methyl-2-pentanon (MIBK) suspendiert. Durch Erhitzen bis zum Rückfluss wird das Anhydrid in Lösung gebracht. Man erhält eine trübe Suspension, bei der sich die Trübung nicht durch Filtration entfernen lässt. Zu der siedenden Lösung tropft man über einen Tropftrichter 75.0 g (0.56 mol, 1.0 Äquiv.) Trimethylolpropan zu. Nach beendeter Zugabe lässt man 4 Stunden unter Rückfluss nachreagieren. Während dieser Zeit fällt das Produkt als weißer Feststoff aus. Unter Rühren wird über Nacht auf Raumtemperatur abgekühlt. Um den Kolbeninhalt in eine filtrierbare Form zu überführen, wird 1 L Toluol zum Ausfällen des Mattierungsmittels zugefügt. Der Feststoff wird filtriert, gewaschen und im Vakuum bei 60 °C bis 80 °C getrocknet.

**Herstellbeispiel 2:**

In einem 2000 mL Mehrhalskolben, ausgerüstet mit Rückflusskühler, Trockenrohr, mechanischem Rührwerk und Tropftrichter, werden 464 g (2.42 mol, 1.5 Äquiv.) Trimellitsäureanhydrid eingewogen und in 1206 mL trockenem 4-Methyl-2-pentanon (MIBK) suspendiert. Durch Erhitzen bis zum Rückfluss wird das Anhydrid in Lösung gebracht. Man erhält eine trübe Suspension, bei der sich die Trübung nicht durch Filtration entfernen lässt. Zu der siedenden Lösung tropft man über einen Tropftrichter ein Gemisch bestehend aus 145 g (1.61 mol, 1.0 Äquiv.) 1,4-Butandiol und 4.6 g (0.06 mol, 0.036 Äquiv.) Pyridin zu. Nach beendeter Zugabe lässt man 4 Stunden unter Rückfluss nachreagieren. Während dieser Zeit fällt das Produkt als weißer Feststoff aus. Unter Rühren wird über Nacht auf Raumtemperatur abgekühlt und der Feststoff filtriert, gewaschen und im Vakuum bei 60 °C bis 80°C getrocknet.

**Herstellbeispiel 3:**

In einem 2000 mL Mehrhalskolben, ausgerüstet mit Rückflusskühler, Trockenrohr, mechanischem Rührwerk und Tropftrichter, werden 166.2 g (0.87 mol, 1.5 Äquiv.) Trimellitsäureanhydrid, 60.0 g (0.58 mol, 1.0 Äquiv.) Neopentylglycol und 0.1 g p-Toluolsulfonsäuremonohydrat eingewogen und in 500 mL trockenem 4-Methyl-2-pentanon (MIBK) suspendiert. Durch Erhitzen bis zum Rückfluss wird das Anhydrid in Lösung gebracht. Sobald Rückfluss erreicht ist, lässt man 6 Stunden nachreagieren. Während dieser Zeit fällt das Produkt als weißer Feststoff aus. Unter Rühren wird über Nacht auf Raumtemperatur abgekühlt und der Feststoff abfiltriert. An einem Rotationsverdampfer wird im Vakuum das Lösungsmittel des Filtrats entfernt. Der feste Rückstand wird im Vakuum bei 60 °C bis 80 °C getrocknet (Herstellbeispiel 3b).

**Herstellbeispiel 4:**

In einem 2000 mL Mehrhalskolben, ausgerüstet mit Rückflusskühler, Trockenrohr, mechanischem Rührwerk und Tropftrichter, werden 55.3 g (0.29 mol, 1.2 Äquiv.) Trimellitsäureanhydrid eingewogen und in 143.8 mL trockenem 4-Methyl-2-pentanon (MIBK) suspendiert. Durch Erhitzen bis zum Rückfluss wird das Anhydrid in Lösung gebracht. Man erhält eine trübe Suspension, bei der sich die Trübung nicht durch Filtration entfernen lässt. Zu der siedenden Lösung

tropft man über einen Tropftrichter ein Gemisch bestehend aus 60 g (0.24 mol, 1.0 Äquiv.) Polytetrahydrofuran und 0.1 g (0.0005 mol, 0.0016 Äquiv.) p-Toluolsulfonsäuremonohydrat zu. Nach beendeter Zugabe lässt man 6 Stunden unter Rückfluss nachreagieren. Nach dem Ende der Nachreaktionszeit wird unter Rühren über Nacht auf Raumtemperatur abgekühlt und anschließend im Vakuum das Lösungsmittel abgezogen. Man erhält das Mattierungsmittel als hochviskose Paste.

**Herstellbeispiel 5:**

In einem 2000 mL Mehrhalskolben, ausgerüstet mit Rückflusskühler, Trockenrohr, mechanischem Rührwerk und Tropftrichter, werden 225.9 g (1.18 mol, 2.0 Äquiv.) Trimellitsäureanhydrid eingewogen und in 143.8 mL trockenem 4-Methyl-2-pentanon (MIBK) suspendiert. Durch Erhitzen bis zum Rückfluss wird das Anhydrid in Lösung gebracht. Man erhält eine trübe Suspension, bei der sich die Trübung nicht durch Filtration entfernen lässt. Zu der siedenden Lösung tropft man über einen Tropftrichter 100.0 g (0.59 mol, 1.0 Äquiv.) 3-Aminomethyl-3,5,5-trimethylcyclohexylamin zu. Bereits bei dem Zutropfen fällt ein Feststoff aus. Nach beendeter Zugabe lässt man kurze Zeit nachreagieren. Nach dem Ende der Nachreaktionszeit wird auf Raumtemperatur abgekühlt und das Lösungsmittel dekantiert. Der zurückgebliebene Feststoff wird gewaschen und im Vakuum bei 60 bis 80 °C getrocknet.

**Herstellbeispiel 6 für ein Vergleichsmattierungsmittel auf Basis einer difunktionellen Carbonsäurekomponenten:**

150.0 g (1.12 mol, 1.0 Äquiv.) Trimethylolpropan, 497.0 g (3.36 mol, 3.0 Äquiv.) Phthalsäureanhydrid, 5.6 g (0,027 mol) Monobutylzinnoxid und 19.4 mL Xylol werden in einen Rührkessel, ausgerüstet mit einem mechanischem Rührer, einem Rückflusskühler und einem Stickstoffeinlass, eingewogen. Der Rührkessel wird mit Stickstoff gespült und auch die Reaktion wird unter Stickstoff ausgeführt. Man erhitzt auf 210 °C, wobei der Kesselinhalt schmilzt und das Phthalsäureanhydrid zu sublimieren beginnt. Man lässt so lange nachreagieren, bis keine Sublimation von Phthalsäureanhydrid mehr zu beobachten ist. Anschließend wird das Xylol im Vakuum abgetrennt, die Schmelze ausgetragen, abgekühlt und gemahlen. Die geringe Menge Xylol sorgt dafür, dass der Rückflusskühler sauber bleibt.

**Verwendete Analysen- und Prüfmethoden**

TMA-Gehalt
Der Restgehalt Trimellitsäureanhydrid und Trimellitsäure wird mit HPLC bestimmt. Die Quantifizierung erfolgt mit Trimellitsäureanhydrid als Referenz nach der Methode des externen Standards. Trimellitsäureanhydrid und Trimellitsäure können in der HPLC nicht unterschieden werden und werden gemeinsam bestimmt.

HPLC-Bedingungen

| | |
|---|---|
| Gerät: | Waters Alliance 2695 |
| Säule: | Reprosil C8 (150x4.6mm, 5μm) |
| Injektionsvolumen: | 10 μl |
| Anzahl Injektionen: | 2 |
| Wellenlänge UV: | 254 nm |

Eluent: Acetonitril/Wasser-Gradient (mit 0.1% Ameisensäure), wobei innerhalb von 25 min die Zusammensetzung von 20/80 (v/v) aus 100/0 (v/v) geändert wird.

| | |
|---|---|
| Flussrate: | 1,0 ml/min |
| Laufzeit: | 25 Minuten |

Auswertung
Die Auswertung erfolgt mit der HPLC-Software Millennium 32 von Waters nach der Methode des externen Standards in Massenprozent. Aus den Ergebnissen von zwei Proben mit je zwei Injektionen wird der Mittelwert berechnet.
Säurezahl
Zur Bestimmung der Säurezahl von Polyestern in mg KOH / g wird das Granulat durch Rückflusskochen in einem Phenol/ Chloroform-Gemisch (40/60 Gew.-%) gelöst. Nach dem Abkühlen auf Raumtemperatur wird mit einer Tetra-n-butylammoniumhydroxyd-Lösung (0,1 mol/l in 2-Propanol/Methanol) titriert, wobei eine Tetrabromphenolblau-Lösung (0,1 Gew.-% in Ethanol) als Indikator verwendet wird.
Schmelzpunkt und Glasumwandlungstemperatur (Tg)
ISO-Norm 11357-1/-2

Granulat
Die Differential Scanning Calorimetry (DSC) wurde mit Aufheizrate von 20 K/min durchgeführt.
Beim Schmelzpunkt wird die Temperatur am Peakmaximum, bei der Glasumwandlungstemperatur die Temperatur am Onset angegeben.

Glanz (60°)
DIN EN ISO 2813
Beschichtetes Stahlblech (Q-panel R-36, 0,8 mm)
Temperatur 23 °C
Prüfgerät Micro-TRI-Gloss (60°/80°/20°) der Firma Byk-Gardner

Reverse-Impact
ASTM D 2794
Einseitig beschichtetes Stahlblech (Q-panel R-36, Dicke 0,8 mm)
Temperatur 23 °C

Das beschichtete Stahlblech (Q-panel R-36, 0,8 mm) wird nach dem Einbrennen zwischen 1 und 12 Stunden bei 23 °C gelagert. Anschliessend lässt man den Schlagbolzen des Kugelschlagprüfers auf die unbeschichtete Rückseite des Prüfblechs fallen. Angegeben wird die Energie in inch*pound (inch*pd) bei der der Lackfilm an der erzeugten Verformung bei der optischen Beurteilung mit einer Lupe (Vergrösserung 10-fach) noch keine Risse aufweist. Dabei gilt 1 inch*pd = 0,01152 kg*m.

Salzsprühbeständigkeit
DIN EN ISO 21227-3
ASTM B 117
Beidseitig beschichtetes Stahlblech (Q-panel R-36, Dicke 0,8 mm) mit Kreuzschnitt
Temperatur 35 °C ± 2 °C
Salzlösung NaCl, 50 Gew.-%-ig
pH-Wert 6,5 - 7,2 bei 23 °C ± 2 °C
versprühte Menge 1 - 2 ml/h
Prüfgerät Erichsen Model 606
Prüfdauer 500 h

Die mit einem Kreuzschnitt versehenen Bleche werden 1 Stunde bei 23 °C und 50 % relativer Feuchte gelagert. Danach werden sie im Gerät in einem Winkel von 60 bis 75 ° in die Halterung gestellt und besprüht. Nach der Prüfung werden die Bleche mit Wasser gereinigt, getrocknet und ca. 1 h bei 23 °C gelagert. Die optische Auswertung erfolgt mit bloßem Auge betreffend der Unterwanderung am Kreuzschnitt und der Blasenbildung.

**Tabelle 1**

In Tabelle 1 ist zusammenfassend eine Charakterisierung der Herstellbeispiele 1 bis 6 bezüglich Ausbeute, Restgehalt an Trimellitsäureanhydrid (TMA), Säuezahl (SZ), Glasumwandlungstemperatur (Tg) und Schmelzpunkt (SMP) dargestellt.

| Herstell-beispiel | Ausbeute [%] | TMA [%] | SZ berechnet [mgKOH/g] | SZ gemessen [mgKOH/g] | $T_g$ (DSC) [°C] | SMP (DSC) [°C] |
|---|---|---|---|---|---|---|
| 1 | 94 | 7.5 | 474 | 519 | - | - |
| 2 | 87 | 1.4 | 474 | 544 | - | 263 |
| 3 | 35 | 1.2 | 460 | 461 | 61 | 117 |
| 4 | 76 | 2.5 | 354 | 296 | - | - |
| 5 | 57 | n.b. | 405 | 392 | - | 187 |
| 6 | 96 | n.b. | 291 | 296 | n.b. | n.b. |

n.b. = nicht bestimmt

Angaben zu den verwendeten Materialien

| | SZ [mgKOH/g] | Brookfield Viskosität bei 200 °C [mpa S] |
|---|---|---|
| Crylcoat 2630-2 | 30 - 36 | 2800 - 4100 |
| Crylcoat 2408-0 | 30 - 35 | 3500 - 5500 |
| Crylcoat 1771-0 | 30 - 37 | 4000 - 5400 |

| β-Hydroxyalkylamide | SMP [°C | Hydroxylzahl [mgKOH/g] |
|---|---|---|
| Primid XL-552 | 120 - 124 | 620 - 700 |
| Primid SF-4510 | 100 - 115 | 550 - 650 |

Araldite GT 7004 (Bisphenol A Epoxidharz)
Epoxidzahl (ISO 3001) 1,33 - 1,40 [eq/kg]
Erweichungspunkt 95- 1001 [°C]
(DIN 51920)
Viskosität bei 25 °C 500 - 600 [mPa s]
(Kugelfall, ISO 12058-1, 40 Gew.-% in Butylcarbitol)

## Herstellungs- und Vergleichsbeispiele für Beschichtungsmassen

### Vergleichsbeispiel 1:

655.5 g Crylcoat 2630-2 (carboxylfunktioneller Copolyester der Firma UCB), 34.5 g Primid XL-552 (Hydroxyalkylamid-Härter der Firma EMS-CHEMIE AG (CH)), 300.0 g Kronos Titan 2160 ($TiO_2$ der Firma Kronos (D)), 8.0 g Resiflow PV88 (Verlaufmittel auf Polyacrylatbasis, Handelsprodukt der Firma Worlée-Chemie GmbH), und 2.0 g Benzoin (Entgasungsmitel) werden in einem Henschelmischer bei 700 Upm während 30 sec trocken gemischt und anschließend auf einem Thysson-Co-Kneter (TSK 20) bei einer Manteltemperatur von 110 °C und einer Schneckenumdrehung von 500 Upm extrudiert. Das Extrudat wird gekühlt, gemahlen und auf < 90 μm abgesiebt. Die Pulverlacke werden elektrostatisch (Corona oder Tribo) auf Stahlbleche (Q-panel R-36 (0.8 mm)) appliziert und bei einer Einbrenntemperatur von 200 °C und einer Einbrennzeit von 20 Minuten im Elektroofen UT6060 der Firma Heraeus (D) ausgehärtet. Die Schichtdicke beträgt ca. 80 μm.

### Vergleichsbeispiel 2:

652.0 g Crylcoat 2630-2 (carboxylfunktioneller Copolyester der Firma UCB), 38.0 g Primid SF-4510 (Hydroxyalkylamid-Härter der Firma EMS-CHEMIE AG (CH)), 300.0 g Kronos Titan 2160 ($TiO_2$ der Firma Kronos (D)), 8.0 g Resiflow PV88 (Verlaufmittel auf Polyacrylatbasis, Handelsprodukt der Firma Worlée-Chemie GmbH), und 2.0 g Benzoin werden in einem Henschelmischer bei 700 Upm während 30 sec trocken gemischt und anschließend auf einem Thysson-Co-Kneter (TSK 20) bei einer Manteltemperatur von 110 °C und einer Schneckenumdrehung von 500 Upm extrudiert. Das Extrudat wird gekühlt, gemahlen und auf < 90 μm abgesiebt. Die Pulverlacke werden elektrostatisch (Corona oder Tribo) auf Stahlbleche (Q-panel R-36 (0.8 mm)) appliziert und bei einer Einbrenntemperatur von 200 °C und einer Einbrennzeit von 20 Minuten im Elektroofen UT6060 der Firma Heraeus (D) ausgehärtet. Die Schichtdicke beträgt ca. 80μm.

### Vergleichsbeispiel 3:

641.7 g Crylcoat 2408-0 (carboxylfunktioneller Copolyester der Firma UCB), 48.3 g TGIC (Triglycidylisocyanurat; Pulverlackhärter der Firma Tengzhou Ruidefeng Fine Chemical Co. (CN)), 300.0 g Kronos Titan 2160 ($TiO_2$ der Firma Kronos (D)), 8.0 g Resiflow PV88 (Verlaufmittel auf Polyacrylatbasis, Handelsprodukt der Firma Worlée-Chemie GmbH), und 2.0 g Benzoin werden in einem Henschelmischer bei 700 Upm während 30 sec trocken gemischt und anschließend auf einem Thysson-Co-Kneter (TSK 20) bei einer Manteltemperatur von 110 °C und einer Schneckenumdrehung von 500 Upm extrudiert. Das Extrudat wird gekühlt, gemahlen und auf < 90 μm abgesiebt. Die Pulverlacke

werden elektrostatisch (Corona oder Tribo) auf Stahlbleche (Q-panel R-36 (0.8 mm)) appliziert und bei einer Einbrenntemperatur von 200 °C und einer Einbrennzeit von 20 Minuten im Elektroofen UT6060 der Firma Heraeus (D) ausgehärtet. Die Schichtdicke beträgt ca. 80 μm.

**Vergleichsbeispiel 4:**

567.6 g Crylcoat 2630-2 (carboxylfunktioneller Copolyester der Firma UCB), 82.4 g Primid XL-552 (Hydroxyalkylamid-Härter der Firma EMS-CHEMIE AG (CH)), 40.0 g Trimellitsäureanhydrid, 300.0 g Kronos Titan 2160 ($TiO_2$ der Firma Kronos (D)), 8.0 g Resiflow PV88 (Verlaufmittel auf Polyacrylatbasis, Handelsprodukt der Firma Worlée-Chemie GmbH), und 2.0 g Benzoin werden in einem Henschelmischer bei 700 Upm während 30 sec trocken gemischt und anschließend auf einem Thysson-Co-Kneter (TSK 20) bei einer Manteltemperatur von 110 °C und einer Schneckenumdrehung von 500 Upm extrudiert. Das Extrudat wird gekühlt, gemahlen und auf < 90 μm abgesiebt. Die Pulverlacke werden elektrostatisch (Corona oder Tribo) auf Stahlbleche (Q-panel R-36 (0.8 mm)) appliziert und bei einer Einbrenntemperatur von 200 °C und einer Einbrennzeit von 20 Minuten im Elektroofen UT6060 der Firma Heraeus (D) ausgehärtet. Die Schichtdicke beträgt ca. 80 μm.

**Vergleichsbeispiel 5:**

593.3 g Crylcoat 2630-2 (carboxylfunktioneller Copolyester der Firma UCB), 56.7 g Primid XL-552 (Hydroxyalkylamid-Härter der Firma EMS-CHEMIE AG (CH)), 40.0 g Herstellbeispiel 6, 300.0 g Kronos Titan 2160 ($TiO_2$ der Firma Kronos (D)), 8.0 g Resiflow PV88 (Verlaufmittel auf Polyacrylatbasis, Handelsprodukt der Firma Worlee-Chemie GmbH), und 2.0 g Benzoin werden in einem Henschelmischer bei 700 Upm während 30 sec trocken gemischt und anschließend auf einem Thysson-Co-Kneter (TSK 20) bei einer Manteltemperatur von 110 °C und einer Schneckenumdrehung von 500 Upm extrudiert. Das Extrudat wird gekühlt, gemahlen und auf < 90 μm abgesiebt. Die Pulverlacke werden elektrostatisch (Corona oder Tribo) auf Stahlbleche (Q-panel R-36 (0.8 mm)) appliziert und bei einer Einbrenntemperatur von 200 °C und einer Einbrennzeit von 20 Minuten im Elektroofen UT6060 der Firma Heraeus (D) ausgehärtet. Die Schichtdicke beträgt ca. 80 μm.

**Beispiel 1:**

592.5 g Crylcoat 2630-2 (carboxylfunktioneller Copolyester der Firma UCB), 57.5 g Primid XL-552 (Hydroxyalkylamid-Härter der Firma EMS-CHEMIE AG (CH)), 40.0 g Mattierungsmittel aus Herstellbeispiel 1, 300.0 g Kronos Titan 2160 ($TiO_2$ der Firma Kronos (D)), 8.0 g Resiflow PV88 (Verlaufmittel auf Polyacrylatbasis, Handelsprodukt der Firma Worlée-Chemie GmbH), und 2.0 g Benzoin werden in einem Henschelmischer bei 700 Upm während 30 sec trocken gemischt und anschließend auf einem Thysson-Co-Kneter (TSK 20) bei einer Manteltemperatur von 110 °C und einer Schneckenumdrehung von 500 Upm extrudiert. Das Extrudat wird gekühlt, gemahlen und auf < 90 μm abgesiebt. Die Pulverlacke werden elektrostatisch (Corona oder Tribo) auf Stahlbleche (Q-panel R-36 (0.8 mm)) appliziert und bei einer Einbrenntemperatur von 200 °C und einer Einbrennzeit von 20 Minuten im Elektroofen UT6060 der Firma Heraeus (D) ausgehärtet. Die Schichtdicke beträgt ca. 80 μm.

**Beispiel 2:**

585.8 g Crylcoat 2630-2 (carboxylfunktioneller Copolyester der Firma UCB), 64.2 g Primid XL-552 (Hydroxyalkylamid-Härter der Firma EMS-CHEMIE AG (CH)), 40.0 g Mattierungsmittel aus Herstellbeispiel 2, 300.0 g Kronos Titan 2160 ($TiO_2$ der Firma Kronos (D)), 8.0 g Resiflow PV88 (Verlaufmittel auf Polyacrylatbasis, Handelsprodukt der Firma Worlée-Chemie GmbH), und 2.0 g Benzoin werden in einem Henschelmischer bei 700 Upm während 30 sec trocken gemischt und anschließend auf einem Thysson-Co-Kneter (TSK 20) bei einer Manteltemperatur von 110 °C und einer Schneckenumdrehung von 500 Upm extrudiert. Das Extrudat wird gekühlt, gemahlen und auf < 90 μm abgesiebt. Die Pulverlacke werden elektrostatisch (Corona oder Tribo) auf Stahlbleche (Q-panel R-36 (0.8 mm)) appliziert und bei einer Einbrenntemperatur von 200 °C und einer Einbrennzeit von 20 Minuten im Elektroofen UT6060 der Firma Heraeus (D) ausgehärtet. Die Schichtdicke beträgt ca. 80 μm.

**Beispiel 3:**

582.2 g Crylcoat 2630-2 (carboxylfunktioneller Copolyester der Firma UCB), 67.8 g Primid SF-4510 (Hydroxyalkylamid-Härter der Firma EMS-CHEMIE AG (CH)), 40.0 g Mattierungsmittel aus Herstellbeispiel 2, 300.0 g Kronos Titan 2160 ($TiO_2$ der Firma Kronos (D)), 8.0 g Resiflow PV88 (Verlaufmittel auf Polyacrylatbasis, Handelsprodukt der Firma Worlée-Chemie GmbH), und 2.0 g Benzoin werden in einem Henschelmischer bei 700 Upm während 30 sec

trocken gemischt und anschließend auf einem Thysson-Co-Kneter (TSK 20) bei einer Manteltemperatur von 110 °C und einer Schneckenumdrehung von 500 Upm extrudiert. Das Extrudat wird gekühlt, gemahlen und auf < 90 μm abgesiebt. Die Pulverlacke werden elektrostatisch (Corona oder Tribo) auf Stahlbleche (Q-panel R-36 (0.8 mm)) appliziert und bei einer Einbrenntemperatur von 200 °C und einer Einbrennzeit von 20 Minuten im Elektroofen UT6060 der Firma Heraeus (D) ausgehärtet. Die Schichtdicke beträgt ca. 80 μm.

**Beispiel 4:**

592.2 g Crylcoat 2630-2 (carboxylfunktioneller Copolyester der Firma UCB), 57.8 g Primid XL-552 (Hydroxyalkylamid-Härter der Firma EMS-CHEMIE AG (CH)), 40.0 g Mattierungsmittel aus Herstellbeispiel 3b, 300.0 g Kronos Titan 2160 ($TiO_2$ der Firma Kronos (D)), 8.0 g Resiflow PV88 (Verlaufmittel auf Polyacrylatbasis, Handelsprodukt der Firma Worlée-Chemie GmbH), und 2.0 g Benzoin werden in einem Henschelmischer bei 700 Upm während 30 sec trocken gemischt und anschließend auf einem Thysson-Co-Kneter (TSK 20) bei einer Manteltemperatur von 110 °C und einer Schneckenumdrehung von 500 Upm extrudiert. Das Extrudat wird gekühlt, gemahlen und auf < 90 μm abgesiebt. Die Pulverlacke werden elektrostatisch (Corona oder Tribo) auf Stahlbleche (Q-panel R-36 (0.8 mm)) appliziert und bei einer Einbrenntemperatur von 200 °C und einer Einbrennzeit von 20 Minuten im Elektroofen UT6060 der Firma Heraeus (D) ausgehärtet. Die Schichtdicke beträgt ca. 80 μm.

**Beispiel 5:**

594.4 g Crylcoat 2630-2 (carboxylfunktioneller Copolyester der Firma UCB), 43.5 g Primid XL-552 (Hydroxyalkylamid-Härter der Firma EMS-CHEMIE AG (CH)), 31.3 g Mattierungsmittel aus Herstellbeispiel 4, 300.0 g Kronos Titan 2160 ($TiO_2$ der Firma Kronos (D)), 7.9 g Resiflow PV88 (Verlaufmittel auf Polyacrylatbasis, Handelsprodukt der Firma Worlée-Chemie GmbH), und 1.9 g Benzoin werden in einem Henschelmischer bei 700 Upm während 30 sec trocken gemischt und anschließend auf einem Thysson-Co-Kneter (TSK 20) bei einer Manteltemperatur von 110 °C und einer Schneckenumdrehung von 500 Upm extrudiert. Das Extrudat wird gekühlt, gemahlen und auf < 90 μm abgesiebt. Die Pulverlacke werden elektrostatisch (Corona oder Tribo) auf Stahlbleche (Q-panel R-36 (0.8 mm)) appliziert und bei einer Einbrenntemperatur von 200 °C und einer Einbrennzeit von 20 Minuten im Elektroofen UT6060 der Firma Heraeus (D) ausgehärtet. Die Schichtdicke beträgt ca. 80 μm.

**Beispiel 6:**

570.2 g Crylcoat 2408-0 (carboxylfunktioneller Copolyester der Firma UCB), 40.0 g Mattierungsmittel aus Herstellbeispiel 2, 79.8 g TGIC, 300.0 g Kronos Titan 2160 ($TiO_2$ der Firma Kronos (D)), 8.0 g Resiflow PV88 (Verlaufmittel auf Polyacrylatbasis, Handelsprodukt der Firma Worlée-Chemie GmbH), und 2.0 g Benzoin werden in einem Henschelmischer bei 700 Upm während 30 sec trocken gemischt und anschließend auf einem Thysson-Co-Kneter (TSK 20) bei einer Manteltemperatur von 110 °C und einer Schneckenumdrehung von 500 Upm extrudiert. Das Extrudat wird gekühlt, gemahlen und auf < 90 μm abgesiebt. Die Pulverlacke werden elektrostatisch (Corona oder Tribo) auf Stahlbleche (Q-panel R-36 (0.8 mm)) appliziert und bei einer Einbrenntemperatur von 200 °C und einer Einbrennzeit von 20 Minuten im Elektroofen UT6060 der Firma Heraeus (D) ausgehärtet. Die Schichtdicke beträgt ca. 80 μm.

**Beispiel 7:**

160.0 g Crylcoat 1771-0 (carboxylfunktioneller Copolyester der Firma UCB), 426.0 g Araldite GT 7004 (Epoxidharz der Firma Huntsman (CH)), 40.0 g Mattierungsmittel aus Herstellbeispiel 2, 300.0 g Kronos Titan 2160 ($TiO_2$ der Firma Kronos (D)), 8.0 g Resiflow PV88 (Verlaufmittel auf Polyacrylatbasis, Handelsprodukt der Firma Worlée-Chemie GmbH), und 2.0 g Benzoin werden in einem Henschelmischer bei 700 Upm während 30 sec trocken gemischt und anschließend auf einem Thysson-Co-Kneter (TSK 20) bei einer Manteltemperatur von 110 °C und einer Schneckenumdrehung von 500 Upm extrudiert. Das Extrudat wird gekühlt, gemahlen und auf < 90 μm abgesiebt. Die Pulverlacke werden elektrostatisch (Corona oder Tribo) auf Stahlbleche (Q-panel R-36 (0.8 mm)) appliziert und bei einer Einbrenntemperatur von 200 °C und einer Einbrennzeit von 20 Minuten im Elektroofen UT6060 der Firma Heraeus (D) ausgehärtet. Die Schichtdicke beträgt ca. 80 μm.

**Tabelle 2**

| Mattierung und Reverse Impact Resistance (abgekürzt Impact)für die beschriebenen Beispiele im Vergleich zu den entsprechenden Vergleichsbeispielen. | | | | | |
|---|---|---|---|---|---|
| Beispiel | Härter | Glanz 60° 20 min 180 °C | Impact 20 min 180 °C | Glanz 60° 20 min 200 °C | Impact 20 min 200 °C |
| | | | [inch*pd] | | [inch*pd] |
| Vergleichs-beispiel 1 | XL-552 | 94 | 160 | 92 | 160 |
| Vergleichs-beispiel 4 | XL-552 | 35 | <10 | 47 | <10 |
| Vergleichs-beispiel 5 | XL-552 | 92 | 160 | 91 | 160 |
| Beispiel 1 | XL-552 | 46 | <10 | 45 | 10 |
| Beispiel 2 | XL-552 | 14 | <10 | 13 | 10 |
| Beispiel 4 | XL-552 | 28 | 10 | 26 | 30 |
| Beispiel 5 | XL-552 | 66 | <10 | 65 | 50 |
| Vergleichs-beispiel 2 | SF-4510 | 93 | 120 | n.b. | n.b. |
| Beispiel 3 | SF-4510 | 37 | <10 | 35 | 60 |
| Vergleichs-beispiel 3 | TGIC | 93 | 160 | n.b. | n.b. |
| Beispiel 6 | TGIC | 7 | 80 | 6 | 80 |
| Beispiel 7 | Hybrid | 12 | 90 | 11 | 160 |
| n.b. = nicht bestimmt | | | | | |

Bei den Vergleichsbeispielen 1 bis 3 handelt es sich um Standardpulverlacke ohne Mattierungsmittel, mit verschiedenen Bindemitteln und unterschiedlichen Härtern.

Bei den Vergleichsbeispielen 4 und 5 handelt es sich um Standardpulverlacke mit Mattierungsmitteln nach dem Stand der Technik (Mattierungsmittel Vergleichsbeispiel 4: aromatische Carbonsäure mit drei Säurefunktionalitäten; Mattierungsmittel Vergleichsbeispiel 5: Reaktionsprodukt aus einer aromatischen Carbonsäure mit zwei Säurefunktionalitäten und einem Alkohol als Nucleophil.

Bei den erfindungsgemäßen Beispielen 1 bis 7 handelt es sich um Standardpulverlacke, die mit den erfindungsgemäßen Mattierungsmitteln mattiert sind.

Der Pulverlack aus Vergleichsbeispiel 4 zeigt zwar eine mattierte Oberfläche, hat aber einen Reverse-Impact von kleiner 10 inch*pd (1 inch*pd entspricht 0,01152 kg*m).

Der Pulverlack aus Vergleichsbeispiel 5 zeigt trotz Mattierungsmittel einen hohen Glanz.

Alle Pulverlacke der erfindungsgemäßen Beispiele zeigen eine mattere Oberfläche als diejenigen der Vergleichsbeispiele und bei 200 °C Einbrenntemperatur weisen sie einen Reverse-Impact von mindestens 10 inch*pd auf.

Die Beispiele 3, 6 und 7 verdeutlichen, dass die erfindungsgemäßen Mattierungsmittel auch in Pulverlacken mit anderen Härtern wirksam und somit ein universell einsetzbar sind.

S

**Tabelle 3**

| Salzsprühbeständigkeit für die Beispiele 2 und 4 im Vergleich mit Vergleichsbeispiel 1. Die Bewertung erfolgt von 0 (gut) bis 4 (schlecht). | | | | | |
|---|---|---|---|---|---|
| Beispiel | Härtung [min/°C) | Substrat* | Prüfdauer [Stunden] | Haftung | Blasen |
| Vergleichs-beispiel 1 | 20/180°C | ALQ-36 | 100 | 0.5 | 0 |

(fortgesetzt)

| Salzsprühbeständigkeit für die Beispiele 2 und 4 im Vergleich mit Vergleichsbeispiel 1. Die Bewertung erfolgt von 0 (gut) bis 4 (schlecht). | | | | | |
|---|---|---|---|---|---|
| Beispiel | Härtung [min/°C) | Substrat* | Prüfdauer [Stunden] | Haftung | Blasen |
| Vergleichs-beispiel 1 | 20/180°C | ALQ-36 | 500 | 0.5 | 0 |
| Vergleichs-beispiel 1 | 20/200°C | ALQ-36 | 100 | 0 | 0 |
| Vergleichs-beispiel 1 | 20/200°C | ALQ-36 | 500 | 0.5 | 0 |
| Beispiel 2 | 20/180°C | ALQ-36 | 100 | 0 | 0 |
| Beispiel 2 | 20/180°C | ALQ-36 | 500 | 0.5 | 0 |
| Beispiel 2 | 20/200°C | ALQ-36 | 100 | 0 | 0 |
| Beispiel 2 | 20/200°C | ALQ-36 | 500 | 0.5 | 0 |
| Beispiel 4 | 20/180°C | ALQ-36 | 100 | 0.5 | 0 |
| Beispiel 4 | 20/180°C | ALQ-36 | 500 | 0.5 | 0 |
| Beispiel 4 | 20/200°C | ALQ-36 | 100 | 0 | 0 |
| Beispiel 4 | 20/200°C | ALQ-36 | 500 | 0.5 | 0 |
| * Q-Panel, Typ ALQ-36, verchromtes Aluminium, Dicke 0,8 mm | | | | | |

Das erfindungsgemäße Mattierungsmittel zeigt keine negativen Auswirkungen auf die Korrosionsbeständigkeit der Pulverlackbeschichtung.

In Fig. 1 sind die Glanzwerte (Geometrie 60°) dargestellt, die bei verschiedenen Aushärtetemperaturen bei einer Aushärtedauer von 20 min erzielt werden. Dabei stellen die grauen Balken die Ergebnisse der gemäß Beispiel 2 hergestellten Beschichtungsmassen dar, während die schwarzen Balken die Ergebnisse der Beschichtungsmassen gemäß Beispiel 3 wiedergeben. Erkennbar ist, dass die Glanzwerte, die mit den erfindungsgemäßen Beschichtungsmassen erzielbar sind, von der Einbrenntemperatur unabhängig sind. Für die Praxis heißt dies, dass auch bei schwankenden Einbrenntemperaturen vergleichbare Oberflächenqualitäten erreicht werden. Dies ist zum Beispiel bei der Montage von Teilen aus unterschiedlichen Beschichtungschargen wichtig.

Durch die Unabhängigkeit des Glanzwertes von der Temperatur, bei der die Beschichtungsmasse ausgehärtet wurde, kann eine zuverlässige Aushärtung bereits bei milden Bedingungen durchgeführt werden, wobei z.B. thermische Abbaureaktionen und dadurch bedingte unerwünschte Verfärbungen vollständig vermieden werden können.

## Patentansprüche

**1.** Mattierungsmittel für Pulverlacke, enthaltend mindestens ein mindestens einfaches Umsetzungsprodukt, herstellbar durch Reaktion

a) mindestens einer aromatischen Polycarbonsäure, die mindestens drei Säurefunktionalitäten aufweist, oder deren Derivate, wobei die Derivate ausgewählt sind aus der Gruppe bestehend aus Carbonsäureanhydriden, Carbonsäurehalogeniden, Carbonsäureester und/oder Mischungen hieraus mit

b) mindestens einem Nucleophil, das mindestens eine nucleophile Sauerstoff-, Stickstoff-, Schwefel- oder Phosphorfunktionalität

und/oder

mindestens zwei nucleophile Sauerstoff-, Stickstoff-, Schwefel- und/oder Phosphorfunktionalitäten, die gleich oder verschieden sein können, aufweist.

**2.** Mattierungsmittel nach Anspruch 1, **dadurch gekennzeichnet, dass** die mindestens eine aromatische Polycarbonsäure oder deren Derivate ausgewählt ist aus der Gruppe bestehend aus Hemimellitsäure, Hemimellitsäureanhydrid, Trimellitsäure, Trimellitsäureanhydrid, Trimesinsäure, Pyromellitsäure und/oder Pyromellitsäureanhydrid.

3. Mattierungsmittel nach einem der vorhergehenden Ansprüche, **dadurch gekennzeichnet, dass** die nucleophilen Funktionalitäten des mindestens einen Nucleophils ausgewählt sind aus der Gruppe bestehend aus OH, SH, $NH_2$, NH(R) mit R = $C_1$ bis $C_{10}$ linear oder verzweigtes Alkyl, $PH_2$, $PH_2(O)$, HP (O) (OH) oder HP $(O)_2$.

4. Mattierungsmittel nach einem der vorhergehenden Ansprüche, **dadurch gekennzeichnet, dass** das Nucleophil ausgewählt ist aus der Gruppe bestehend aus Monoalkoholen; Diolen; alkoxylierten Diolen; Polyolen; alkoxylierten Polyolen; Oligomeren, Polymeren und/oder Copolymeren aus Ethylenoxid, Propylenoxid, Tetrahydrofuran, $\alpha,\omega$-Hydroxysäuren, $\alpha,\omega$-Aminosäuren, Lactonen und/oder Lactamen, Aminen, Mercaptanen, Phosphanen, Phosphinsäuren, Phosphiten und/oder Mischungen hieraus.

5. Mattierungsmittel nach einem der vorhergehenden Ansprüche, **dadurch gekennzeichnet, dass** die Reaktion zur Herstellung des Mattierungsmittels unter Verwendung eines Katalysators, bevorzugt ausgewählt aus der Gruppe bestehend aus quartären Ammonium- und/oder Phosphoniumsalzen; Metallsalzen und/oder Metallverbindungen, z.B. Zinn-(II)-octoat; Imidazolen, z.B. 2-Phenyl-2-imidazol; tertiäre Aminen, z.B. Pyridin, Triethylamin, N-Benzyldimethylamin, 1,8-Diazabicyclo[5,4,0]-7-undecen und/oder Mischungen hieraus ausgeführt wird.

6. Mattierungsmittel nach einem der vorhergehenden Ansprüche, **dadurch gekennzeichnet, dass** die Reaktion in einem Lösungsmittel, ausgewählt aus der Gruppe bestehend aus Aceton, 2-Butanon, 4-Methyl-2-pentanon, 1,4-Dioxan, Dimethylsulfoxid, N,N-Dimethylformamid, N,N-Dimethylacetamid, Acetonitril, Diethylcarbonat, Butylacetat und/oder Mischungen hieraus ausgeführt wird.

7. Mattierungsmittel nach einem der vorhergehenden Ansprüche, **dadurch gekennzeichnet, dass** bei der Reaktion das molare Mischungsverhältnis der Summe der mindestens einen aromatischen Polycarbonsäure oder deren Derivate zur Summe des mindestens einen Nucleophils zwischen 1,2 : 1 und 4,8 : 1, bevorzugt 2,2 : 1 und 3,8 : 1, besonders bevorzugt 2,5 : 1 und 3,5 : 1 liegt.

8. Mattierungsmittel nach einem der vorhergehenden Ansprüche, **dadurch gekennzeichnet, dass** das mindestens eine Umsetzungsprodukt eine Struktur gemäß Formel I

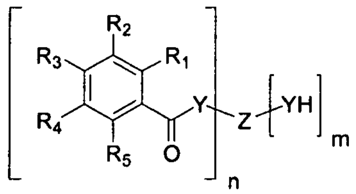

Formel I

besitzt, wobei
Y gleich oder verschieden ist und ausgewählt ist aus O, S, NH, N(R), PH, PH (O), P (O) (OH) oder $P(O)_2$,
Z 2 bis 26 Kohlenstoffatome, bevorzugt 2 bis 20 Kohlenstoffatome, besonders bevorzugt 3 bis 8 Kohlenstoffatome, ganz besonders bevorzugt 4 bis 6 Kohlenstoffatome besitzt und ausgewählt ist aus linearen, cyclischen oder verzweigten Alkandiyl-, Alkendiyl-, Arenediyl- oder heteroatomhaltige Arenediylgruppen,
$R_1$ bis $R_5$ unabhängig voneinander ausgewählt sind aus der Gruppe bestehend aus H, Carboxylgruppe und/oder Carbonsäureanhydridfunktionalitäten zwischen zwei benachbarten Resten $R_1$ bis $R_5$, und m von 0 bis 7 und n von 1 bis 8 beträgt, mit der Maßgabe dass m+n maximal 8 beträgt.

9. Mattierungsmittel nach vorhergehendem Anspruch, **dadurch gekennzeichnet dass** das mindestens eine Umsetzungsprodukt eine Verbindung ausgewählt aus der Gruppe bestehend aus a) bis f) ist:

a)

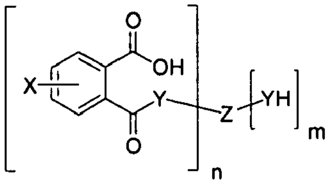

Formel II

wobei X eine zur freien Carboxylgruppe meta- oder paraständige weitere freie Carboxylgruppe bedeutet,
b)

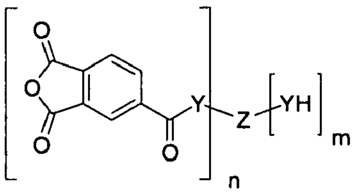

Formel III

c)

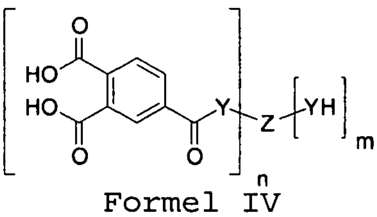

Formel IV

d)

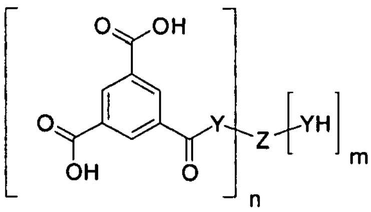

Formel V

e)

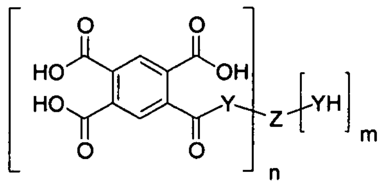

Formel VI

f)

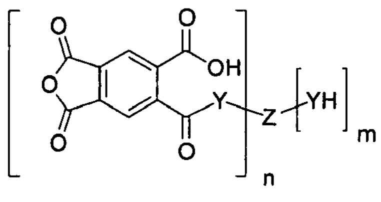

Formel VII

wobei jeweils Y, Z, n, m, m+n die gleiche Bedeutung wie in Anspruch 7 haben.

**10.** Mattierungsmittel nach einem der vorhergehenden Ansprüche, **dadurch gekennzeichnet, dass** zusätzlich mindestens eine weitere Di- oder Polycarbonsäure und/oder jeweils deren Anhydrid zugemischt ist.

**11.** Mattierungsmittel nach vorhergehendem Anspruch, **dadurch gekennzeichnet, dass** die Di- oder Polycarbonsäure und/oder jeweils deren Anhydrid ausgewählt ist aus der Gruppe bestehend aus Hemimellitsäure, Hemimellitsäureanhydrid, Trimellitsäure, Trimellitsäureanhydrid, Trimesinsäure, Pyromellitsäure, Pyromellitsäureanhydrid, Phthalsäure, Phthalsäureanhydrid, Isophthalsäure und/oder Terephthalsäure.

**12.** Mattierungsmittel nach einem der beiden vorhergehenden Ansprüche, **dadurch gekennzeichnet, dass** die mindestens eine weitere Di- oder Polycarbonsäure und/oder jeweils deren Anhydrid sowie nicht umgesetzte aromatische Polycarbonsäuren in einem Mengenanteil zwischen 0,5 bis 70 Gew.-%, bevorzugt 1 bis 65 Gew.-%, besonders bevorzugt 3 bis 55 Gew.-%, ganz besonders bevorzugt 10 bis 30 Gew.-%, bezogen auf das Mattierungsmittel, zugemischt oder vorhanden sind.

**13.** Mattierungsmittel nach einem der vorhergehenden Ansprüche, **dadurch gekennzeichnet, dass** zusätzlich mindestens ein β-Hydroxyalkylamid zugemischt ist.

**14.** Mattierungsmittel nach vorhergehendem Anspruch, **dadurch gekennzeichnet, dass** das β-Hydroxyalkylamid die allgemeine Formel VIII und/oder Formel IX aufweist

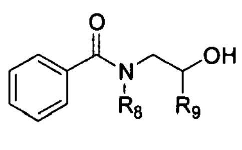

Formel VIII

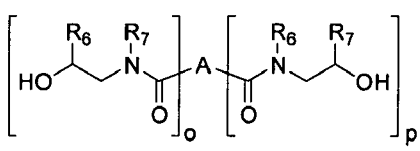

Formel IX

wobei

$R_6$ Wasserstoff oder lineares oder verzweigtes $C_1$-$C_5$-Alkyl ist,

$R_7$ Wasserstoff, lineares oder verzweigtes $C_1$-$C_5$-Alkyl oder (HO-CH($R_6$)-$CH_2$)-, wobei $R_6$ die zuvor angegebene

Bedeutung besitzt,
$R_6$ und $R_7$ gleich oder verscheiden sein können,
A eine chemische Bindung oder eine ein- oder mehrwertige organische Gruppe, abgeleitet aus linearen, verzweigten, cyclischen, gesättigten, ungesättigten, aromatischen und/oder substituierten Kohlenwasserstoffgruppen mit 1 bis 26 Kohlenstoffatomen, bevorzugt 2 bis 20 Kohlenstoffatomen, besonders bevorzugt 4 bis 8 Kohlenstoffatomen ist,
o 1 bis 2, p 0 bis 2 beträgt, wobei o+p mindestens 2 ist,
$R_9$ Wasserstoff oder lineares oder verzweigtes $C_1$ bis $C_5$-Alkyl ist,
$R_8$ Wasserstoff, lineares oder verzweigtes $C_1$ bis $C_5$-Alkyloder (HO-CH($R_9$)-$CH_2$)- ist, wobei $R_9$ die zuvor angegebene Bedeutung hat.

**15.** Mattierungsmittel nach einem der beiden vorhergehenden Ansprüche, **dadurch gekennzeichnet, dass** molare Verhältnis der OH-Gruppen des β-Hydroxyalkylamids zu den COOH-Gruppen des Mattierungsmittels im Bereich von 0,1:1 bis 2,5:1, bevorzugt 0,3:1 bis 2,0:1, besonders bevorzugt 0,6:1 bis 1,6:1 liegt.

**16.** Wärmehärtbare Beschichtungsmasse, enthaltend

a) mindestens ein Bindemittel
b) mindestens ein Mattierungsmittel nach einem der Ansprüche 1 bis 15,
c) mindestens einen Härter.

**17.** Beschichtungsmasse nach vorhergehendem Anspruch, **dadurch gekennzeichnet, dass** das Bindemittel mindestens einen Stoff, ausgewählt aus der Gruppe bestehend aus carboxylfunktionellen Polyestern, carboxylfunktionellen Copolyestern, Epoxidharzen und/oder Mischungen hieraus, enthält.

**18.** Beschichtungsmasse nach vorhergehendem Anspruch, dass das Bindemittel eine Mischung aus mindestens zwei Polyestern und/oder Copolyestern mit verschiedenen Säurezahlen enthält.

**19.** Beschichtungsmasse nach einem der Ansprüche 16 bis 18, **dadurch gekennzeichnet, dass** der Härter ausgewählt ist aus der Gruppe bestehend aus β-Hydroxyalkylamiden, Triglycidylisocyanurat, mindestens einem Glycidylester und/oder Mischungen hieraus.

**20.** Beschichtungsmasse nach vorhergehendem Anspruch, **dadurch gekennzeichnet, dass** das β-Hydroxyalkylamid eine Struktur gemäß Formel IX

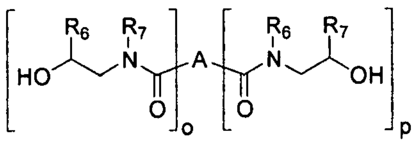

Formel IX

besitzt, wobei
$R_6$ Wasserstoff oder lineares oder verzweigtes $C_1$-$C_5$-Alkyl ist,
$R_7$ Wasserstoff, lineares oder verzweigtes $C_1$-$C_5$-Alkyl oder (HO-CH($R_6$)-$CH_2$)-, wobei $R_6$ die zuvor angegebene Bedeutung besitzt,
$R_6$ und $R_7$ gleich oder verscheiden sein können, A eine chemische Bindung oder eine ein- oder mehrwertige organische Gruppe, abgeleitet aus linearen, verzweigten, cyclischen, gesättigten, ungesättigten, aromatischen und/oder substituierten Kohlenwasserstoffgruppen mit 1 bis 26 Kohlenstoffatomen, bevorzugt 2 bis 20 Kohlenstoffatomen, besonders bevorzugt 4 bis 8 Kohlenstoffatomen ist,
o 1 bis 2, p 0 bis 2 beträgt, wobei o+p mindestens 2 ist.

**21.** Beschichtungsmasse nach vorhergehendem Anspruch, **dadurch gekennzeichnet, dass** das β-Hydroxyalkylamid ausgewählt ist aus Bis[N,N'-di(β-hydroxyethyl)-adipamid] und/oder Bis[N,N'-di(β-hydroxypropyl)-adipamid].

**22.** Beschichtungsmasse nach einem der Ansprüche 16 bis 21, **dadurch gekennzeichnet, dass** das molare Mischungsverhältnis von Härter zu Bindemittel von 0,5:1 bis 1,5:1, bevorzugt 0,7:1 bis 1,3:1, besonders bevorzugt 0,8:1 bis 1,2:1 beträgt.

**23.** Beschichtungsmasse nach einem der Ansprüche 16 bis 22, **dadurch gekennzeichnet, dass** weitere Additive, ausgewählt aus der Gruppe bestehend aus aromatischen Polycarbonsäuren mit mindestens 2 Carbonsäurefunktionalitäten, Pigmenten, Füllstoffe, Stabilisatoren, Triboadditive, Verlaufmittel, Entgasungsmittel, Antioxidantien, Vergilbungsstabilisatoren und/oder Katalysatoren enthalten sind.

**24.** Beschichtungsmasse nach einem der Ansprüche 16 bis 23 mit einer Gesamtformulierung enthaltend je mindestens ein/einen

| | |
|---|---|
| a) Bindemittel | 35 bis 96 Gew.-%, |
| bevorzugt | 50 bis 80 Gew.-%, |
| b) Mattierungsmittel nach einem der Ansprüche 1 bis 15 | 0,5 bis 5 Gew.-%, |
| bevorzugt | 1 bis 3 Gew.-%, |
| c) Härter | 4 bis 10 Gew.-%, |
| bevorzugt | 5 bis 7 Gew.-%, |
| d) Additive | 0,1 bis 50 Gew.-%, |
| bevorzugt | 10 bis 40 Gew.-%. |

**25.** Verwendung einer Beschichtungsmasse nach einem der Ansprüche 16 bis 24 für das Flammspritzen und/oder das ladungsfreie Aufstreuen auf die zu beschichtenden Werkstoffe.

**26.** Verwendung einer Beschichtungsmasse nach einem der Ansprüche 16 bis 24 als Schutzschichten.

**27.** Verwendung einer Beschichtungsmasse nach einem der Ansprüche 16 bis 24 für das elektrostatische Pulverbeschichten, bevorzugt nach dem triboelektrischen oder Corona-Pulversprühverfahren oder das Wirbelschichtverfahren.

Fig. 1

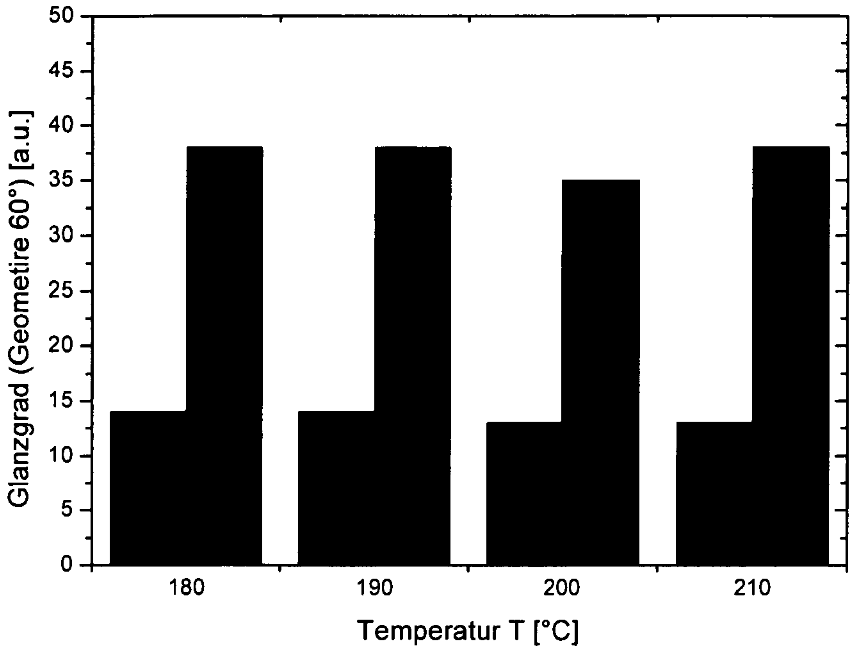
Glanzgrad (Geometire 60°) [a.u.]
0
5
10
15
20
25
30
35
40
45
50
180
190
200
210
Temperatur T [°C]

Europäisches Patentamt

# EUROPÄISCHER RECHERCHENBERICHT

Nummer der Anmeldung
EP 07 02 5019

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | WO 03/102048 A (GRACE GMBH & CO KG [DE]; FLETCHER TIM [DE]) 11. Dezember 2003 (2003-12-11) * Beispiele 1, 3 und 12 * ----- | 1-24,26 | INV. C09D5/03 |
| X | GB 1 413 681 A (UCB SA) 12. November 1975 (1975-11-12) * Beispiel 1 * ----- | 1-5, 10-12 | |
| X | EP 0 649 890 A (INVENTA AG [CH]) 26. April 1995 (1995-04-26) * Beispiele 1-5,7-9 * * Tabelle 1a * ----- | 1-4, 10-24 | |
| X | WO 00/17276 A (MCWHORTER TECHNOLOGIES INC [US]) 30. März 2000 (2000-03-30) * Beispiele 1,2,3-6 * * Tabelle 1 Seite 23 * ----- | 1-5, 10-12, 16-18, 23,26 | |
| X | FR 2 365 614 A (RHONE POULENC IND [FR]) 21. April 1978 (1978-04-21) * Beispiele 1-4 Seite 11 * * Tabelle 5, Seite 13 * ----- | 1-4,10, 11, 16-18, 23,26 | RECHERCHIERTE SACHGEBIETE (IPC) C09D |

Der vorliegende Recherchenbericht wurde für alle Patentansprüche erstellt

| Recherchenort | Abschlußdatum der Recherche | Prüfer |
|---|---|---|
| München | 13. März 2008 | Marquis, Damien |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
&: Mitglied der gleichen Patentfamilie, übereinstimmendes Dokument

2
EPO FORM 1503 03.82 (P04C03)

## ANHANG ZUM EUROPÄISCHEN RECHERCHENBERICHT ÜBER DIE EUROPÄISCHE PATENTANMELDUNG NR. EP 07 02 5019

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

13-03-2008

| Im Recherchenbericht angeführtes Patentdokument | Datum der Veröffentlichung | Mitglied(er) der Patentfamilie | Datum der Veröffentlichung |
|---|---|---|---|
| WO 03102048 A | 11-12-2003 | AU 2003237667 A1 | 19-12-2003 |
| | | BR 0311481 A | 15-03-2005 |
| | | CA 2487870 A1 | 11-12-2003 |
| | | CN 1671771 A | 21-09-2005 |
| | | JP 2005528487 T | 22-09-2005 |
| | | MX PA04011699 A | 14-02-2005 |
| | | US 2006229400 A1 | 12-10-2006 |
| | | ZA 200410373 A | 28-06-2006 |
| GB 1413681 A | 12-11-1975 | AU 468865 B2 | 22-01-1976 |
| | | AU 6153573 A | 24-04-1975 |
| | | BE 806227 A2 | 18-04-1974 |
| | | DD 107713 A5 | 12-08-1974 |
| | | DE 2352467 A1 | 02-05-1974 |
| | | FR 2203844 A1 | 17-05-1974 |
| | | IT 997889 B | 30-12-1975 |
| | | JP 49097071 A | 13-09-1974 |
| | | LU 68647 A1 | 09-05-1974 |
| | | NL 7314292 A | 23-04-1974 |
| | | US 3887642 A | 03-06-1975 |
| EP 0649890 A | 26-04-1995 | AT 204011 T | 15-08-2001 |
| | | CZ 9402574 A3 | 13-12-1995 |
| | | DE 4335845 A1 | 27-04-1995 |
| | | DK 649890 T3 | 08-10-2001 |
| | | ES 2161737 T3 | 16-12-2001 |
| | | FI 944879 A | 21-04-1995 |
| | | JP 3604430 B2 | 22-12-2004 |
| | | JP 7179812 A | 18-07-1995 |
| WO 0017276 A | 30-03-2000 | AT 264373 T | 15-04-2004 |
| | | AU 768278 B2 | 04-12-2003 |
| | | AU 5915199 A | 10-04-2000 |
| | | BR 9913795 A | 06-11-2001 |
| | | CA 2344539 A1 | 30-03-2000 |
| | | CN 1318094 A | 17-10-2001 |
| | | CZ 20010981 A3 | 12-12-2001 |
| | | DE 69916472 D1 | 19-05-2004 |
| | | DE 69916472 T2 | 25-05-2005 |
| | | EP 1114101 A1 | 11-07-2001 |
| | | JP 2002526590 T | 20-08-2002 |
| | | US 6248843 B1 | 19-06-2001 |
| | | ZA 200102127 A | 14-06-2002 |
| FR 2365614 A | 21-04-1978 | BE 858920 A1 | 16-01-1978 |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- US 3842035 A
- WO 03102048 A1
- EP 1302517 A2